# EUROPÄISCHE PATENTSCHRIFT

(11) **EP 3 485 186 B1**
(45) Veröffentlichungstag und Bekanntmachung des Hinweises auf die Patenterteilung: **17.06.2020**
(21) Anmeldenummer: 17761046.6
(22) Anmeldetag: 22.08.2017
(51) Int. Cl.: F16J 15/34, F16J 15/38

(54) **GASDICHTUNG**
GAS SEAL
JOINT ÉTANCHE AUX GAZ

(30) Priorität: 13.09.2016 EP 16188480
(43) Veröffentlichungstag der Anmeldung: 22.05.2019
(73) Patentinhaber: Siemens Aktiengesellschaft, 80333 München (DE)
(72) Erfinder: KIRCHNER, Christian, 47495 Rheinberg (DE)
(86) Internationale Anmeldenummer: PCT/EP2017/071109
(87) Internationale Veröffentlichungsnummer: WO 2018/050406

(56) Entgegenhaltungen:
- EP-A1- 0 177 161
- EP-A1- 0 367 721
- EP-A2- 0 315 941
- DE-A1-102011 007 071

## Beschreibung

Die Erfindung betrifft eine Gasdichtung, insbesondere Trockengasdichtung, die sich entlang einer Umfangsrichtung bezüglich einer Achse erstreckt, umfassend einen rotierenden Gleitring und einen stehenden Gleitring, wobei der stehende Gleitring axial beweglich ist, wobei die Gasdichtung eine Gleithülse umfasst, wobei die Gleithülse mittels einer ersten Gleitfläche den stehenden Gleitring an einer zweiten Gleitfläche entlang der axialen Beweglichkeit radial führt.

Gasdichtungen bzw. Trockengasdichtungen der eingangs definierten Art sind bereits aus verschiedenen Veröffentlichungen bekannt. Beispiele hierfür sind WO2014/037150 oder WO2014/023581.

Derartige Trockengasdichtungen umfassen in der Regel Bauteile aus Keramik, insbesondere aus Siliziumkarbid oder Wolframkarbid hergestellt. Die keramischen Bauteile sind meist die stehenden und/oder rotierenden Gleitringe und ggf. angrenzende Elemente. Ein weiteres Beispiel aus der Patentliteratur ist durch die DE 39 25 403 C2 gegeben.

Aus der EP 0 177 161 A1 ist bereits eine Gasdichtung der eingangs definierten Art bekannt. Die EP 0 315 941 A2 zeigt die Verwendung einer Spiralfeder für die konzentrische Verbindung zweier Bauteile aus unterschiedlichen Materialien.

Die Wärmeausdehnung dieser keramischen Werkstoffe beträgt etwa 3,5x10⁻⁶m/K mal Meter. Die Wärmeausdehnung von Stahl, demjenigen Werkstoff, der in der Regel zu diesen Keramiken der Dichtungen benachbart verbaut wird, beträgt im Vergleich dazu etwa 11x10⁻⁶m/K mal Meter. Die sich aus dieser Differenz der Wärmeausdehnungskoeffizienten ergebende Relativdehnung zwischen den Keramik-Komponenten und den Stahl-Komponenten muss entsprechend kompensiert werden, so dass eine simple Befestigung der keramischen Wellendichtungsbauteilen an den stählernen Bauteilen nicht in Frage kommt.

Die Erfindung hat es sich zur Aufgabe gemacht, eine leistungsfähige und einfache technische Lösung für die Befestigung der keramischen Komponenten an den stählernen Komponenten einer eingangs definierten Gasdichtung bereitzustellen.

Zur Lösung der erfindungsgemäßen Aufgabe wird eine Gasdichtung der eingangs definierten Art mit den zusätzlichen Merkmalen des Kennzeichens des Anspruchs 1 vorgeschlagen. Die jeweils rückbezogenen Unteransprüche beinhalten vorteilhafte Weiterbildungen der Erfindung.

Begriffe, wie axial, radial, tangential oder Umgangsrichtung werden - wenn nicht anders angegeben - auf die zentrale Achse bezogen, in dessen Umfangsrichtung sich die erfindungsgemäße Gasdichtung erstreckt. Diese Achse fällt in der Regel mit einer Wellenrotationsachse zusammen, zu der die Gasdichtung eine Wellendichtung ausbildet, um einen Spalt zwischen einer rotierbaren Welle bzw. einem Rotor und einem Gehäuse abzudichten. Es hat sich gezeigt, dass die Befestigung einer Gleithülse einer Gasdichtung an einem Stator der Gasdichtung oder sonstigen Gehäusebauteilen im Stand der Technik zum größten Teil sehr umständlich und raumgreifend, insbesondere in Radialrichtung raumgreifend, ausgebildet ist.

Bevorzugt ist die Wellendichtung bzw. die erfindungsgemäße Gasdichtung als ein für sich transportfähiger Einsatz - häufig auch als Cartridge bezeichnet - ausgebildet, so dass diese Modularität beispielsweise einen einfachen Austausch einer defekten Gasdichtung durch eine intakte Gasdichtung ermöglicht. Grundsätzlich ist es nach der Erfindung auch möglich, dass der Stator direkter, ggf. einstückiger Bestandteil des Gehäuses der Maschine, in der die Gasdichtung eingebaut wird, beispielsweise ein Radialturboverdichter - ist.

Eine vorteilhafte Weiterbildung der Erfindung sieht vor, dass die Leithülse aus Keramik besteht, insbesondere aus Siliziumkarbid oder Wolframkarbid. Der Gleitring und die Gleithülse bestehen aufgrund ihrer dauerhaft hohen Maßhaltigkeitsanforderungen bevorzugt aus diesen Keramiken.

Damit das Fixierelement vorteilhaft einfach montierbar ist, ist es nach einer vorteilhaften Weiterbildung derart elastisch ausgebildet, dass eine Biegeverformbarkeit quer zur Längsrichtung des Fixierelements gegeben ist. Auf diese Weise kann das Fixierelement in den sich in Umfangsrichtung erstreckenden gekrümmten Hohlraum unter einer entsprechenden Verbiegung bevorzugt tangential eingeschoben werden. Besonders bevorzugt weisen zu diesem Zweck entweder der Stator oder die Gleithülse selbst einen in den Hohlraum einmündenden Einschubkanal auf, so dass das Fixierelement in den Hohlraum durch den Einschubkanal einführbar ist. Zweckmäßig verläuft der Einschubkanal tangential zu dem sich in Umfangsrichtung erstreckenden Hohlraum.

Eine andere vorteilhafte Weiterbildung sieht vor, dass das Fixerelement auch in Radialrichtung verformbar ausgebildet ist. Hierzu kann das Fixierelement insbesondere als Schraubenfeder und besonders bevorzugt als Schlauchfeder oder Wurmfeder ausgebildet sein. Grundsätzlich kann das Fixierelement hierbei aus einem elastischen Werkstoff bestehen oder beispielsweise aus einem schraubenartig geformten Stahlprofil, das besonders bevorzugt ein flaches Profil aufweist. Die Schraubenfeder bzw. das Fixierelement kann weitestgehend spielfrei in den Hohlraum eingeführt bzw. in dem Hohlraum angeordnet sein, so dass die Gleithülse sicher an dem Stator befestigt ist. Unter einer elastischen Verformung des Fixierelements ergibt sich der zusätzliche Vorteil einer Elastizität der Gasdichtung, insbesondere in Axialrichtung. Trotz der axialen Nachgiebigkeit ist die erfindungsgemäße Fixierung der Gleithülse ausreichend, die benötigte Stabilität, insbesondere gegen Schwingungen, herzustellen. Weil der Rotor auch axial bei z. B. einer Turbomaschine schwingt, ist die zusätzliche axiale Elastizität in der Befestigung der Gleithülse für die Dichtung besonders vorteilhaft.

Im Folgenden ist die Erfindung anhand eines Ausführungsbeispiels unter Bezugnahme auf eine Zeichnung näher erläutert. Es zeigt:

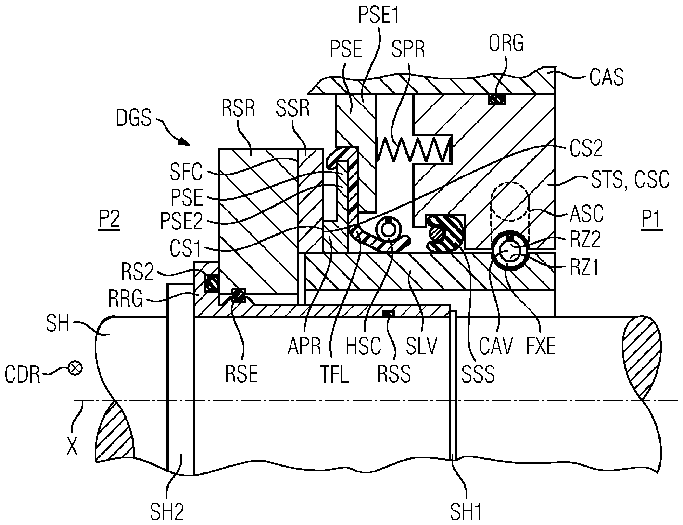

- Figur 1: einen schamtischen Längsschnitt durch eine erfindungsgemäße Gasdichtung.

Figur 1 zeigt einen schematischen Längsschnitt durch eine erfindungsgemäße Gasdichtung mit angrenzendem Gehäuse CAS und einer angrenzenden Welle SH.

Die erfindungsgemäße Gasdichtung DGS ist als ein Einsatz ausgebildet, der für sich unabhängig von dem Gehäuse CAS und der Welle SH transportfähig ist.

Auf der Welle SH ist ein Rotorring RRG mittels zweier Absätze SH1, SH2 radial und axial befestigt, wobei mindestens einer oder die beiden Absätze SH1, SH2 in nicht näher dargestellter Weise an der Welle SH lösbar befestigt sind. Der Rotorring RRG weist zur Welle SH eine rotierende statische Dichtung RSS auf.

In der Zeichnung auf der linken Seite befindet sich ein Maschineninnendruck P2 und auf der rechten Seite ein niedriger Außendruck P1.

Ein rotierender Gleitring RSR ist an dem Rotorring RRG mittels einer Wurmfeder RSE befestigt, wobei die Wurmfeder RSE nur unter radialer Deformation eine axiale Bewegung des rotierenden Gleitrings RSR aus der Sollposition heraus ermöglicht. Der rotierende Gleitring RSR ist mit einer zweiten rotierenden statischen Dichtung RS2 zum Rotorring RRG abgedichtet.

Einer Dichtfläche SFC des rotierenden Gleitrings RSR steht ein stehender Gleitring SSR mit einer korrespondierenden Dichtfläche SFC axial gegenüber, wobei eine Feder SPR mittels eines Druckelements PSE den stehenden Gleitring SSR mit seiner Dichtfläche SFC gegen den rotierenden Gleitring RSR axial andrückt.

Das Druckelement PSE ist axial in zwei Abschnitte geteilt, die sich in Umfangsrichtung erstrecken, einem ersten Abschnitt PSE1 und einen zweiten Abschnitt PSE2, wobei die beiden Abschnitte mittels der Feder SPR axial aneinander und axial gegen den stehenden Gleitring SSR gedrückt werden. Der erste Abschnitt PSE1 ist metallisch ausgeführt und der zweiten Abschnitt PSE2 keramisch, bevorzugt aus der gleichen Keramik, wie eine Gleithülse SLV, die sich in Umfangsrichtung erstreckt und als Führung dient für eine Axialbewegung des Druckelements PSE und des stehenden Gleitrings SSR. Das Spiel zwischen der Gleithülse SLV und dem zweiten Abschnitt PSE2 ist gering ausgebildet, so dass der zweite Abschnitt und damit das gesamte Druckelement PSE radial gelagert und axial verschiebbar geführt ist. Die Darstellung des Radialspiels der Gleithülse SLV zu den Elementen Gleitring SSR und Druckelement PSE ist in der Zeichnung nicht repräsentativ, das Spiel kann jedenfalls auch geringer ausfallen und auch das Verhältnis der Radialspiele ist nicht repräsentativ wiedergegeben.

Der zweite Abschnitt PSE2 liegt mit einem axialen Vorstand APR, der eine erste axiale Anlagefläche CS1 aufweist, an einer zweiten Anlagefläche CS2 des stehenden Gleitrings SSR an. Die beiden Anlageflächen CS1, CS2 sind gegeneinander geläppt ausgebildet, so dass die nahezu spielfreie Anlage als Dichtung wirkt.

Zwischen den beiden Abschnitten ist eine sich in Umfangsrichtung erstreckende Teflondichtung TFL angeordnet und mittels des Anpressdrucks des Druckelements PSE1 an dem stehenden Gleitring SSR gehalten, so dass die beiden ersten Abschnitte PSE1, PSE2 dichtend aneinander anliegen.

Der stehende Gleitring SSR ist axial verschieblich auf der Gleithülse SLV mit wenig radialem Spiel geführt, so dass der Beweglichkeitsfreiheitsgrad auf die Axialbewegung eingeschränkt ist. Ebenso gelagert ist auch der zweite Abschnitt PSE2 des Druckelements PSE. Sowohl der stehende Gleitring SSR als auch die Gleithülse SLV sind aus Wolframkarbid oder Siliziumkarbid hergestellt.

Die Teflondichtung TFL des Druckelements PSE erstreckt sich nach radial innen über die Anlagefläche zwischen den beiden Abschnitten PSE1, PSE2 des Druckelements PSE hinaus. Die Teflondichtung TFL erstreckt sich auf der Seite des höheren Drucks axial auch über den Übergang zwischen dem Druckelement PSE und der Gleithülse SLV hinaus. Aufgrund des geringen radialen Spiels zwischen der Gleithülse SLV und dem zweiten Abschnitt PSE2 des Druckelements PSE wird unter Druck die Teflondichtung TFL nur geringfügig in diesen Radialspalt hinein extrudiert, so dass eine Dichtwirkung gewährleistet ist.

Die stehende Gleithülse SLV ist mittels eines Befestigungselements FXE an einem Stator STS befestigt, wobei der Stator STS gleichzeitig ein Gehäuse CSC der Gasdichtung DGS ist.

Ein Hohlraum CAV ist definiert durch eine sich in Umgangsrichtung CDR erstreckende erste Ausnehmung RZ1 der Gleithülse SLV und eine sich in Umfangsrichtung CDR erstreckende im Bereich der Befestigung gegenüberliegende zweite Ausnehmung RZ2 des Stators STS.

Das Gehäuse CSC der Gasdichtung DGS ist gegenüber dem Gehäuse CAS der Turbomaschine mittels einer O-Ring-Dichtung ORG abgedichtet. Grundsätzlich ist es auch denkbar, dass das Gehäuse der Turbomaschine und das Gehäuse CSC der Gasdichtung DGS ein einziges Bauteil sind. Das Fixierelement FXE ist durch einen im Wesentlichen tangentialen Einschubkanal ASC tangential in den Hohlraum CAV einführbar.

Das Fixierelement FXE ist als Wurmfeder ausgebildet und dementsprechend handelt es sich im Grunde um eine Schraubenfeder, bevorzugt aus einem metallischen Werkstoff. Zum Zwecke der Dichtung ist zwischen der Gleithülse SLV und dem Stator STS noch eine Statordichtung SSS vorgesehen, den Differenzdruck zwischen dem Außendruck P1 und dem Innendruck P2 aufrechtzuerhalten.

Alternativ kann das Fixierelement FXE als Draht ausgebildet sein, insbesondere als massiver Draht, das bedeutet, ohne planmäßige Hohlräume im Querschnitt. Die Ausbildung als Draht ist besonders kostengünstig und harmoniert gut mit der Möglichkeit des durch einen im Wesentlichen tangentialen Einschubkanal ASC tangential in den Hohlraum CAV einführbaren Fixierelements FXE. Die Verformbarkeit des Drahtes ist hierbei in der Regel ausreichend, die unterschiedlichen Ausdehnungskoeffizienten zu kompensieren.

Zum Zwecke der Sicherung in der gewünschten Position ist die Teflondichtung TFL mittels eines helikalen, sich in Umfangsrichtung CDR erstreckenden Federelements HSC radial mit dem radial inneren hervorstehendem Ende gegen die Gleithülse SLV gedrückt, so dass ein etwaiger Differenzdruck von der Teflondichtung TFL, insbesondere in dem Bereich zwischen dem statischen Gleitring SSR und der Gleithülse SLV, hier zwischen dem Druckelement PSE und der Gleithülse SLV abgedichtet ist. Hierbei wird die Teflondichtung TFL teilweise in einen Spalt zwischen der Gleithülse SLV und dem Druckelement hinein extrudiert. Das helikale Federelement HSC hält die Teflondichtung TFL lediglich in der hierfür geeigneten Position.

## Patentansprüche

1. Gasdichtung,
insbesondere Trockengasdichtung, die sich in einer Umfangsrichtung (CDR) bezüglich einer Achse (X) erstreckt, umfassend
einen rotierenden Gleitring (RSR) und einen stehenden Gleitring (SSR),
wobei der stehende Gleitring (SSR) axial beweglich ist, wobei die Gasdichtung (GDS) eine Gleithülse (SLV) umfasst, wobei die Gleithülse (SLV) mittels einer ersten Gleitfläche (SSF1) den stehenden Gleitring (SSR) an einer zweiten Gleitfläche (SSF2) entlang der axialen Beweglichkeit radial führt,
**dadurch gekennzeichnet, dass**
die Gleithülse (SLV) an einem Stator (STS) der Gasdichtung (GDS) befestigt ist,
wobei die Gleithülse (SLV) eine sich in Umfangsrichtung (CDR) erstreckende erste Ausnehmung (RZ1) und der Stator (STS) eine sich in Umfangsrichtung (CDR) erstreckende im Bereich der Befestigung der ersten Ausnehmung (RZ1) gegenüberliegende zweite Ausnehmung (RZ2) aufweist, derart, dass die erste Ausnehmung (RZ1) und die zweite Ausnehmung (RZ2) einen gemeinsamen sich in Umfangsrichtung (CDR) ringartig erstreckenden Hohlraum (CAV) definieren,
wobei in dem Hohlraum (CAV) ein längliches Fixierungselement (FXE) angeordnet ist, das die erste Ausnehmung (RZ1) und zweite Ausnehmung (RZ2) zumindest teilweise derart ausfüllt, dass eine unbegrenzte axiale Relativbewegung nur bei radialer Verformung des Fixierelements (FXE) möglich ist.

2. Gasdichtung (DGS) nach Anspruch 1,
wobei die Gleithülse (SLV) aus Keramik besteht und der Stator (STS) aus Metall.

3. Gasdichtung (DGS) nach Anspruch 1 oder 2,
wobei das Fixierelement (FXE) derart elastisch ausgebildet ist, dass eine Biegeverformbarkeit quer zur Längsrichtung des Fixierelements (FXE) gegeben ist.

4. Gasdichtung (DGS) nach Anspruch 3,
wobei der Stator (STS) oder die Gleithülse (SLV) einen in den Hohlraum (CRV) einmündenden Einschubkanal (ASC) aufweist, so dass das Fixierelement(FXE) in den Hohlraum (CAV) durch den Einschubkanal (ASC) einführbar ist.

5. Gasdichtung (DGS) nach Anspruch 4,
wobei der Einschubkanal (ASC) zumindest abschnittsweise im Wesentlichen tangential zum Hohlraum (CRV) verläuft.

6. Gasdichtung (DGS) nach Anspruch 2,
wobei die Gleithülse (SLV) zumindest abschnittsweise aus Wolframkarbid oder Siliziumkarbid besteht.

7. Gasdichtung (DGS) nach mindestens einem der Ansprüche 1 bis 6,
wobei das Fixierelement (FXE) als Schraubenfeder, insbesondere als Schlauchfeder oder Wurmfeder ausgebildet ist.

8. Gasdichtung (DGS) nach mindestens einem der Ansprüche 1 bis 6,
wobei das Fixierelement (FXE) als Draht, insbesondere als massiver Draht, ausgebildet ist.

## Claims

1. Gas seal,
in particular dry gas seal, which extends in a circumferential direction (CDR) with respect to an axis (X),
comprising
a rotating slide ring (RSR) and a stationary slide ring (SSR), wherein the stationary slide ring (SSR) is axially movable, wherein the gas seal (GDS) comprises a slide sleeve (SLV), wherein, by means of a first slide surface (SSF1), the slide sleeve (SLV) radially guides the stationary slide ring (SSR) on a second slide surface (SSF2) along the axial direction of mobility,
**characterized in that**
the slide sleeve (SLV) is fastened to a stator (STS) of the gas seal (GDS),
wherein the slide sleeve (SLV) has a first recess (RZ1), extending in the circumferential direction (CDR), and the stator (STS) has a second recess (RZ2), extending in the circumferential direction (CDR) and situated opposite the first recess (RZ1) in the region of the fastening,
such that the first recess (RZ1) and the second recess (RZ2) define a common cavity (CAV), which extends in the circumferential direction (CDR) in an annular manner, wherein, in the cavity (CAV), there is arranged an elongate fixing element (FXE) which at least partially fills the first recess (RZ1) and second recess (RZ2) such that an unlimited axial relative movement is possible only when the fixing element (FXE) is radially deformed.

2. Gas seal (DGS) according to Claim 1,
wherein the slide sleeve (SLV) consists of ceramic and the stator (STS) consists of metal.

3. Gas seal (DGS) according to Claim 1 or 2,
wherein the fixing element (FXE) is formed elastically such that a bending deformability is provided transversely with respect to the longitudinal direction of the fixing element (FXE).

4. Gas seal (DGS) according to Claim 3,
wherein the stator (STS) or the slide sleeve (SLV) has an insertion channel (ASC), opening out into the cavity (CRV), such that the fixing element (FXE) is able to be introduced into the cavity (CAV) through the insertion channel (ASC).

5. Gas seal (DGS) according to Claim 4,
wherein the insertion channel (ASC) runs, at least in portions, substantially tangentially with respect to the cavity (CRV).

6. Gas seal (DGS) according to Claim 2,
wherein the slide sleeve (SLV) consists, at least in portions, of tungsten carbide or silicon carbide.

7. Gas seal (DGS) according to at least one of Claims 1 to 6, wherein the fixing element (FXE) is designed in the form of a helical spring, in particular in the form of a tube spring or worm spring.

8. Gas seal (DGS) according to at least one of Claims 1 to 6, wherein the fixing element (FXE) is designed in the form of a wire, in particular in the form of a solid wire.

## Revendications

1. Joint étanche au gaz,
notamment joint étanche au gaz sec, qui s'étend dans une direction (CDR) de pourtour par rapport à un axe (X), comprenant
un anneau (RSR) glissant tournant et un anneau (SSR) glissant fixe,
dans lequel l'anneau (SSR) glissant fixe est mobile axialement,
dans lequel le joint (GDS) étanche au gaz comprend un manchon (SLV) glissant,
dans lequel le manchon (SLV) glissant guide radialement, suivant la mobilité axiale, au moyen d'une première surface (SSF1) de glissement, l'anneau (SSR) glissant fixe sur une deuxième surface (SSF2) de glissement,
**caractérisé en ce que**
le manchon (SLV) glissant est fixé à un stator (STS) du joint (GDS) étanche au gaz,
dans lequel le manchon (SLV) glissant a un premier évidement (RZ1) s'étendant dans la direction (CDR) de pourtour et le stator (STS) a un deuxième évidement (RZ2) s'étendant dans la direction (CDR) du pourtour dans la région de fixation opposée au premier évidement (RZ1), de manière à ce que le premier évidement (RZ1) et le deuxième évidement (RZ2) définissent une cavité (CAV) commune s'étendant de manière annulaire dans la direction (CDR) du pourtour,
dans lequel, dans la cavité (CAV) est disposé un élément (FXE) oblong d'immobilisation, qui remplit, au moins en partie, le premier évidement (RZ1) et le deuxième évidement (RZ2), de manière à rendre possible un déplacement relatif axial illimité seulement par déformation radiale de l'élément (FXE) d'immobilisation.

2. Joint (DGS) étanche au gaz suivant la revendication 1, dans lequel le manchon (SLV) glissant est en céramique et le stator (STS) en métal.

3. Joint (DGS) étanche au gaz suivant la revendication 1 ou 2,
dans lequel l'élément (FXE) d'immobilisation est constitué élastiquement, de manière à donner une déformabilité à la flexion transversalement à la direction longitudinale de l'élément (FXE) d'immobilisation.

4. Joint (DGS) étanche au gaz suivant la revendication 3, dans lequel le stator (STS) ou le manchon (SLV) glissant a un canal (ASC) d'introduction débouchant dans la cavité (CRV), de manière à pouvoir introduire l'élément (FXE) d'immobilisation dans la cavité (CAV) par le canal (ASC) d'introduction.

5. Joint (DGS) étanche au gaz suivant la revendication 4, dans lequel le canal (ASC) d'introduction s'étend, au moins par endroit, sensiblement tangentiellement à la cavité (CRV).

6. Joint (DGS) étanche au gaz suivant la revendication 2, dans lequel le manchon (SLV) glissant est, au moins par endroit, en carbure de tungstène ou en carbure de silicium.

7. Joint (DGS) étanche au gaz suivant au moins l'une des revendications 1 à 6,
dans lequel l'élément (FXE) d'immobilisation est constitué sous la forme d'un ressort hélicoïdal, notamment sous la forme d'un ressort à tube souple ou d'un ressort annulaire.

8. Joint (DGS) étanche au gaz suivant au moins l'une des revendications 1 à 6,
dans lequel l'élément (FXE) d'immobilisation est constitué sous la forme d'un fil métallique, notamment d'un fil métallique plein.
